# EUROPÄISCHE PATENTANMELDUNG

(11) **EP 1 502 903 A1**
(43) Veröffentlichungstag der Anmeldung: **02.02.2005**
(21) Anmeldenummer: 03017170.6
(22) Anmeldetag: 29.07.2003
(51) Int. Cl.: C04B 22/00, C04B 40/00

(54) **Verfahren zur Herstellung fliessfähiger Baustoffe**

(71) Anmelder: Condis Umwelttechnik GmbH, 30163 Hannover (DE)
(72) Erfinder: Rethwilm, Udo, 30175 Hannover (DE)
(74) Vertreter: Scheffler, Jörg, Dipl.-Ing.

(57) **Zusammenfassung**

Die Erfindung betrifft die Verfahren zur Herstellung von fließfähigen Baustoffen, insbesondere Beton. Dabei wird ein dem Baustoff zuzuführendes Fluid (1) einer Behandlung durch ein Magnetfeld und/oder elektrostatisches Feld unterzogen, dessen Parameter zur Erzielung vorbestimmter Fließeigenschaften, insbesondere der Viskosität, aufgrund gemessener Werte des Fluides (1) bestimmt werden. Auf diese Weise lassen sich bestimmte Fließeigenschaften des Baustoffes in der gewünschten Weise einstellen, ohne dass hierzu zusätzliche Additive erforderlich werden. Vielmehr werden die Fließeigenschaften auf einem rein physikalischen Wege eingestellt, so dass der Aufwand bei der Herstellung wesentlich vermindert und zugleich eine umweltschonendere Herstellung erreicht wird.

## Beschreibung

Die Erfindung betrifft die Verfahren zur Herstellung von fließfähigen Baustoffen, insbesondere Beton.

Die Herstellung von Beton wird nach DIN 1045 definiert als ein künstlicher Stein, der sich aus einem Gemisch von Zement, Zuschlagstoffen, wie insbesondere Sand, Kies und Splitt, sowie Betonzusatzmitteln, beispielsweise Abbindebeschleuniger bzw. -verzögerer und Wasser zusammensetzt und durch Erhärten entsteht.

Unterschieden wird Beton in der Praxis beispielsweise aufgrund seiner Trockenrohdichte in Leicht-, Normal- und Schwerbeton und nach seinem Bindemittel-(Zement-)Gehalt unterschieden. Um die gewünschten Eigenschaften des Betons zu realisieren, werden dem Wasser Zusatzmittel zugefügt. Der Einsatz von Zusatzmitteln führt jedoch zu einem erhöhten Herstellungsaufwand, so dass insbesondere die Produktionskosten dadurch nachteilig beeinflusst werden.

Es ist auch bereits bekannt, dem Fluid geeignete Additive zur Einstellung der Fließeigenschaften zuzuführen. Die zugeführten Additive verändern jedoch nicht nur die Fließeigenschaften, sondern wirken sich in vielfältiger Weise auf die Materialeigenschaften des Betons aus, so dass es zu unerwünschten Nebenwirkungen kommen kann.

Es ist ferner auch bereits die Herstellung von Beton mit behandeltem Wasser bekannt, welches für die Betonproduktion aufbereitet wird. Das Verfahren basiert auf einer elektronisch gesteuerten Frequenz- und Impulstechnik, mit der die Eigenschaften des Wassers auf physikalischem Wege optimiert werden. Dies ist für die Betonproduktion vor allem von wirtschaftlichem Interesse, da sich so nicht nur die Betonqualität verbessern lässt, sondern gleichzeitig Additive, Zement und Wasser eingespart werden können.

Die Wasseraufbereitung beispielsweise zur Anwendung bei der Betonherstellung war auch bereits Gegenstand russischer Forschungen im Rahmen der Untersuchungen zu den Grundlagen der physikalischen Wasserbehandlung. Demnach sollen sich infolge der magnetischen und elektrostatischen Behandlung Mineralien besser lösen und beispielsweise Beton härter werden. Allerdings erwiesen sich einige Untersuchungen beispielsweise zum "Polywasser" als nicht haltbar.

Forschungsarbeiten aus Japan und Russland zeigen, dass die physikalischen Wasserbehandlungsgeräte primär auf das Wasser selbst einwirken und dieses in seiner Struktur verändern. Diese temporäre Veränderung des Wassers führt dann zu anderen "wässrigen Bedingungen" an den Grenzflächen zwischen dem jeweiligen Festkörper und dem Wasser. Dadurch verändert sich beispielsweise die Kristallkeimbildungsgeschwindigkeit von Kalk oder das Oxidationsverhalten von Metallen in wässrigem Milieu. Mit speziellen Untersuchungsmethoden lassen sich auch Behandlungseffekte in entsalztem Wasser nachweisen. Gezeigt werden kann dies durch die Veränderung der Wasserfilmdicke auf einer rotierenden Walze infolge einer vorherigen physikalischen Behandlung des Wassers. Noch unverstanden ist die im Labor messbare und in der Praxis beobachtbare gewisse Beständigkeit des Behandlungseffektes.

Die technisch verwertbaren Effekte der Wasserbehandlung entstehen durch die Wechselwirkung des Wassers mit geeigneten magnetischen und elektrischen Feldern unter abgestimmten Strömungsbedingungen.

Auf der Basis dieser Erkenntnisse liegt der Erfindung die Aufgabe zugrunde, eine Möglichkeit zu schaffen, die Eigenschaften von fließfähigen Baustoffen, insbesondere Beton weiter zu verbessern.

Diese Aufgabe wird erfindungsgemäß mit einem Verfahren gemäß den Merkmalen des Anspruchs 1 gelöst. Die Unteransprüche betreffen besonders zweckmäßige Weiterbildungen der Erfindung.

Erfindungsgemäß ist also ein Verfahren zur Herstellung von fließfähigen Baustoffen, insbesondere Beton vorgesehen, beim dem ein zuzuführendes Fluid einer Behandlung durch ein magnetisches und/oder elektrostatisches Feld unterzogen wird, wobei die Parameter des Magnetfeldes zur Erzielung vorbestimmter Fließeigenschaften aufgrund gemessener Werte des Fluides gesteuert werden. Auf diese Weise lassen sich mittels der Magnetfeldbehandlung und elektrostatischen Behandlung bestimmte Fließeigenschaften des Baustoffes, insbesondere Betons, signifikant verbessern, ohne dass hierzu weitere Zusatzmittel erforderlich werden. Vielmehr werden die Fließeigenschaften auf einem rein physikalischen Wege eingestellt, so dass der Aufwand bei der Herstellung wesentlich vermindert wird, und zugleich eine umweltschonende Herstellung realisiert wird. Das Verfahren ist aufgrund des verminderten Additiveinsatzes wesentlich wirtschaftlicher in der Durchführung und gestattet zudem die Festlegung von Fließeigenschaften ohne nachteilige Nebeneffekte.

Dabei erweist es sich als besonders Erfolg versprechend wenn durch das Verfahren eine vorbestimmte Viskosität des Fluides eingestellt wird. Hierdurch wird das dem Herstellungsverfahren anschließende Formgebungsverfahren vor dem Aushärten des Baustoffes wesentlich verbessert, indem die erforderliche Viskosität verändert, beispielsweise verringert wird, ohne dass hierzu der Wasseranteil erhöht werden muss.

Das Fluid könnte einem Permanentmagnetfeld ausgesetzt werden. Besonders vorteilhaft ist hingegen eine Ausgestaltung des erfindungsgemäßen Verfahrens, bei dem die Magnetfeldbehandlung und/oder elektrostatische Behandlung mittels Magnetfeldimpulsen durchgeführt wird. Hierbei wird das Fluid derart gezielt in seinen Eigenschaften eingestellt, dass die erforderliche Fließfähigkeit mit großer Genauigkeit und damit an den jeweiligen Verwendungsund Einsatzweck sowie die jeweiligen Umgebungsbedingungen in optimaler Weise eingestellt werden kann.

Dabei wird eine besonders vorteilhafte Ausgestaltung des Verfahrens auch dann erreicht, wenn Frequenz oder Amplitude oder Form der Impulse steuerbar ist, um so die gewünschte Fließfähigkeit einzustellen. Insbesondere wird so die Viskosität dadurch auf der Basis unterschiedlichster Fluideigenschaften problemlos einstellbar, wobei insbesondere auch temporäre Änderungen mit einem geringen Aufwand ohne Rückwirkung auf die Fließeigenschaften berücksichtigt werden können.

Dabei erweist sich eine weitere günstige Ausgestaltung als besonders zweckmäßig, wenn als Messwerte zusätzlich Umgebungsbedingungen bzw. -einflüsse, insbesondere die Temperatur erfasst werden, um so mögliche Fehlereinflüsse und Abweichungen frühzeitig zu erkennen und die Magnetfeldbehandlung darauf abstimmen zu können.

Beispielsweise werden nach einer weiteren Erfolg versprechenden Abwandlung als Messwerte die anwendungsspezifischen Daten, insbesondere der Feuchtegehalt des zur Betonherstellung vorgesehenen Sandes erfasst, dessen Anteil an dem Gesamtwassergehalt und weitere Eigenschaften dadurch ebenfalls bei der Magnetfeldbehandlung und/oder elektrostatischen Behandlung des Fluids Berücksichtigung finden.

Eine andere, ebenfalls besonders günstige Abwandlung des erfindungsgemäßen Verfahrens wird dann erreicht, wenn als Messwert die Dichte oder die gemessene Viskosität des Fluides erfasst werden. Hierdurch kann ein nach dem Stand der Technik bisher ausgeschlossenes Spektrum unterschiedlicher wässriger Fluide, insbesondere Recyclingwasser, eingesetzt werden, die je nach Einsatzbedingungen auch bereits mit Additiven zur Einstellung bestimmter Eigenschaften behandelt sein können. Eine vorhergehende Behandlung des Fluides ist daher nicht erforderlich.

Wichtig für die Qualität von Wasser und Beton, insbesondere von Recyclingwasser und Selbstverdichtendem Beton, ist die Bestimmung der Partikelverteilung innerhalb der genannten Fluide. Deshalb ist die Messung der Partikelverteilung zur Erzielung einer hohen Effizienz besonders zweckmäßig.

Weiterhin ist es besonders günstig, wenn die Leitfähigkeit des Fluides bestimmt wird, um so eine schnelle Erfassung wesentlicher Parameter des Fluides, insbesondere eine online Überwachung, zu ermöglichen. Unerwünschte Verzögerungen bei der Messwerterfassung, beispielsweise verursacht durch labortechnische Untersuchungen, können dadurch vermieden werden.

Dabei erweist es sich als besonders Erfolg versprechend, wenn die Verfahrensschritte der Behandlung und der Messwerterfassung des Fluides wiederholt werden bis Differenzwerte der aufeinander folgenden Messwerte einen vorbestimmten Wert unterschreiten. Durch diese iterative Schrittfolge können optimale Behandlungsergebnisse erzielt werden. Als Abbruchkriterium bei der Behandlung wird dabei eine Differenzwertbetrachtung der gemessenen jeweiligen Werte und der bei dem vorausgegangenen Zyklus gemessenen Werte herangezogen und deren relative Abweichungen ermittelt. Sofern die ermittelten Abweichungen einen vorgegebenen Grenzwert unterschritten haben, beispielsweise als gegen null laufen, wird die Behandlung ausgesetzt. Hierdurch wird eine wirtschaftliche Durchführung des Verfahren sichergestellt, wobei jedoch grundsätzlich unerwünscht nachteilige Einflüsse ausgeschlossen sind.

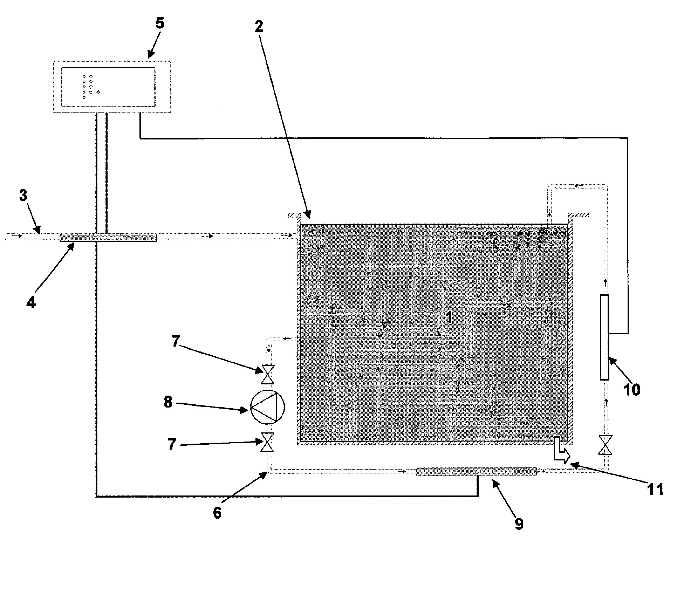

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer Prinzipskizze einer Vorrichtung zur Durchführung des erfindungsgemäßen Verfahrens zur Herstellung von fließfähigen Baustoffen, insbesondere Beton. Ein für die Betonherstellung vorgesehenes Fluid 1 wird dabei zunächst in einem Sammelbehälter 2 aufgefangen. Zur Erfassung der wesentlichen Parameter des Fluides 1 dient ein an einem Zulauf 3 angeordneter Sensor 4, dessen Signale mittels einer Steuereinheit 5 erfasst werden. Aus dem Sammelbehälter 2 wird regelmäßig oder Bedarfsweise ein Fluidvolumen über einen Umlauf 6, welcher mit Durchflussregeleinrichtungen 7 sowie einer Pumpe 8 ausgestattet ist, zur Behandlung entnommen. Das Fluid 1 gelangt so zu einem Durchflusskörper 9, in dem ein Magnetfeld und/oder ein elektrostatisches Feld zur Erzielung vorbestimmter Fließeigenschaften aufgrund der mittels des Sensors 4 gemessener Werte auf das Fluid 1 einwirkt. Anschließend wird das Fluid 1 in den Sammelbehälter 2 zurückgeführt. Zuvor wird das Fluid 1 mittels eines weiteren Sensors 10 erneut messtechnisch erfasst, um so die jeweiligen Behandlungsergebnisse durch die Steuereinheit 5 erfassen zu können. Das in dem Sammelbehälter 2 vorhandene Fluid 1 kann auf diese Weise jederzeit an einem Ablauf 11 zur Betonherstellung entnommen werden, wobei mittels der Steuereinheit 5 zusätzlich auch anwendungsspezifische Daten, wie insbesondere der Feuchtegehalt des zur Betonherstellung vorgesehenen Sandes, erfasst werden können.

## Patentansprüche

1. Verfahren zur Herstellung von fließfähigen Baustoffen, insbesondere Beton vorgesehen, bei dem ein zuzuführendes Fluid (1) einer Behandlung durch ein magnetisches oder elektrostatisches Feld unterzogen wird, wobei die Parameter des Magnetfeldes und/oder elektrostatischen Feldes zur Erzielung vorbestimmter Fließeigenschaften aufgrund gemessener Werte des Fluides (1) gesteuert werden.

2. Verfahren nach Anspruch 1, **dadurch gekennzeichnet, dass** durch das Verfahren eine vorbestimmte Viskosität des Fluides (1) eingestellt wird.

3. Verfahren nach den Ansprüchen 1 oder 2, **dadurch gekennzeichnet, dass** die Behandlung mittels Magnetfeldimpulsen und/oder ein elektrostatisches Feld durchgeführt wird.

4. Verfahren nach zumindest einem der vorhergehenden Ansprüche, **dadurch gekennzeichnet, dass** Frequenz und/oder Amplitude und/oder Form der Impulse steuerbar ist.

5. Verfahren nach zumindest einem der vorhergehenden Ansprüche, **dadurch gekennzeichnet, dass** als Messwerte zusätzlich Umgebungsbedingungen bzw. -einflüsse, insbesondere Temperatur und Windintensität erfasst werden.

6. Verfahren nach zumindest einem der vorhergehenden Ansprüche, **dadurch gekennzeichnet, dass** als Messwerte die anwendungsspezifischen Daten, insbesondere der Feuchtegehalt des zur Betonherstellung vorgesehenen Sandes erfasst werden.

7. Verfahren nach zumindest einem der vorhergehenden Ansprüche, **dadurch gekennzeichnet, dass** als Messwert die Dichte und/oder die gemessene Viskosität des Fluides (1) erfasst werden.

8. Verfahren nach zumindest einem der vorhergehenden Ansprüche, **dadurch gekennzeichnet, dass** die Leitfähigkeit des Fluides (1) sowie die Partikelverteilung innerhalb des Fluides bestimmt wird.

9. Verfahren nach zumindest einem der vorhergehenden Ansprüche, **dadurch gekennzeichnet, dass** die Verfahrensschritte der Behandlung durch ein Magnetfeld und/oder ein elektrostatisches Feld und der Messwerterfassung des Fluides (1) wiederholt werden, bis Differenzwerte der aufeinander folgenden Messwerte einen vorbestimmten Wert unterschreiten.
